(19) Europäisches Patentamt / European Patent Office / Office européen des brevets

(11) **EP 2 544 398 B1**

(12) **FASCICULE DE BREVET EUROPEEN**

(45) Date de publication et mention
de la délivrance du brevet:
**02.09.2015 Bulletin 2015/36**

(51) Int Cl.:
***H04L 9/30*** *(2006.01)*

(21) Numéro de dépôt: **12174881.8**

(22) Date de dépôt: **04.07.2012**

(54) **Procédé de calcul de fonctions d'encodage dans une coubre elliptique et coprocesseur cryptographique correspondant**

Verfahren zur Berechnung einer Kodierungsfunktion in einer elliptischen Kurve, und entsprechender kryptografischer Koprozessor

Method for computing an encoding into an elleptic curve and corresponding cryptographic coprocessor

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.07.2011 FR 1155992**

(43) Date de publication de la demande:
**09.01.2013 Bulletin 2013/02**

(73) Titulaire: **Oberthur Technologies
92700 Colombes (FR)**

(72) Inventeurs:
• **Sierra, Yannick
92726 NANTERRE CEDEX (FR)**
• **Rondepierre, Franck
92726 NANTERRE CEDEX (FR)**

(74) Mandataire: **Orsini, Fabienne et al
Coralis
14/16, rue Ballu
75009 Paris (FR)**

(56) Documents cités:
• **THOMAS ICART: "How to Hash into Elliptic Curves", 16 août 2009 (2009-08-16), ADVANCES IN CRYPTOLOGY - CRYPTO 2009, SPRINGER BERLIN HEIDELBERG, BERLIN, HEIDELBERG, PAGE(S) 303 - 316, XP019125359, ISBN: 978-3-642-03355-1 * section 2, 3 et 5 ***
• **ERIC BRIER ET AL: "Efficient Indifferentiable Hashing into Ordinary Elliptic Curves", 15 août 2010 (2010-08-15), ADVANCES IN CRYPTOLOGY Â CRYPTO 2010, SPRINGER BERLIN HEIDELBERG, BERLIN, HEIDELBERG, PAGE(S) 237 - 254, XP019147643, ISBN: 978-3-642-14622-0 * sections 2.1, 7 ***
• **JULIEN BRINGER ET AL: "Password Based Key Exchange Protocols on Elliptic Curves Which Conceal the Public Parameters", 22 juin 2010 (2010-06-22), APPLIED CRYPTOGRAPHY AND NETWORK SECURITY, SPRINGER BERLIN HEIDELBERG, BERLIN, HEIDELBERG, PAGE(S) 291 - 308, XP019144595, ISBN: 978-3-642-13707-5 * page 295 ***

EP 2 544 398 B1

## Description

### 1. DOMAINE DE L'INVENTION

Le domaine de l'invention est celui de la cryptographie.

Plus précisément, l'invention concerne une technique de calcul cryptographique qui permet de réduire le temps d'exécution de certains cryptosystèmes.

L'invention a de nombreuses applications, notamment elle permet de concevoir de nouveaux cryptoprocesseurs plus performants pour l'exécution de certains cryptosystèmes.

Plus généralement, elle peut s'appliquer dans tous les cas où des contraintes de temps liées à l'exécution de certains cryptosystèmes (tant d'un point de vue matérielle que logicielle) sont importantes.

### 2. ARRIÈRE-PLAN TECHNOLOGIQUE

On s'attache plus particulièrement dans la suite de ce document à décrire la problématique existant dans le domaine des cartes à puces (notamment utilisées dans des passeports électroniques), à laquelle ont été confrontés les inventeurs de la présente demande de brevet. L'invention ne se limite bien sûr pas à ce domaine particulier d'application, mais présente un intérêt pour tout système électronique ou informatique devant faire face à une problématique proche ou similaire.

Traditionnellement, les calculs cryptographiques qui sont réalisés sur des cartes à puces (et plus précisément dans les microcontrôleurs positionnés sur celles-ci) doivent satisfaire à de nombreuses exigences (sécuritaires, mais aussi fonctionnelles).

Une des contraintes récurrente consiste à exiger que le temps d'exécution de certains cryptosystèmes ne doit pas dépasser une borne temporelle donnée.

Par exemple, dans des aéroports, il est important qu'une authentification réalisée par un passeport électronique ne soit pas trop longue (car autrement, le temps d'attente des passagers seraient trop important).

Pour respecter ces contraintes temporelles, plusieurs stratégies peuvent être envisagées.

Une première solution consiste à proposer à la communauté un nouveau cryptosystème possédant la même finalité que d'autres cryptosystèmes déjà existants, mais avec un nombre d'opérations différent qui de fait réduit le temps d'exécution de celui-ci.

Cependant, un inconvénient de cette première solution réside dans le fait que, tout nouveau cryptosystème doit être validé d'un point de vue sécuritaire et fonctionnel. Or cette validation peut prendre beaucoup de temps (ce qui fut le cas pour trouver un remplaçant à la fonction de chiffrement par bloc DES (acronyme anglais de « *Data Encryption Standard* »), ou à la fonction de hachage SHA (acronyme anglais de « *Secure Hash Algorithm*»), le NIST (organisme de standardisation américain : « *National Institute of Standards and Technology* ») ayant demandé à la communauté cryptographique de participer à la validation des candidats).

Une deuxième solution consiste à modifier la fréquence des coprocesseurs cryptographiques pour réduire le temps d'exécution de cryptosystèmes utilisant ceux-ci.

Cependant, cette deuxième solution est rarement utilisable en pratique, car des contraintes liées à la consommation d'une carte à puce sont souvent établies, et de fait, il est donc impossible d'augmenter la fréquence du coprocesseur cryptographique sans augmenter la quantité d'énergie consommée.

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique permettant d'accélérer l'exécution de certains cryptosystèmes sans nécessiter une augmentation de la consommation du dispositif dans lequel est mis en oeuvre la présente technique.

Au moins un mode de réalisation de l'invention a également pour objectif de fournir une telle technique qui permet de concevoir de nouveaux coprocesseurs cryptographiques plus performants (d'un point de vue temps d'exécution), et qui ne nécessite que peu de modifications.

### 4. EXPOSÉ DE L'INVENTION

Dans un mode de réalisation particulier de l'invention, il est proposé un composant électronique permettant de réaliser des calculs cryptographiques, et comprenant des moyens permettant de réaliser des opérations d'arithmétique modulaire de base, avec pour modulus un nombre entier $N>0$, et des moyens d'obtention d'un couple de nombres entiers $(d,e)$ pour lequel l'équation suivante est vérifiée $(x^e)^d = x \bmod N$, quelque soit l'élément $x$ appartenant au groupe $Z/NZ$, et comprenant en outre des moyens de calcul d'un élément $\delta = D^e \bmod N$, correspondant au calcul d'une exponentiation avec, pour exposant, l'élément $e$, et d'un élément $\varepsilon = (E)^{\wedge}(-b) \bmod N$, correspondant à un calcul combinant une inversion modulaire et une exponentiation avec un exposant $b$, un entier positif, pour des éléments D et E qui appartiennent au groupe $Z/NZ$. Ce composant électronique est remarquable en ce que les moyens de calcul réalisent des calculs communs permettant de déterminer conjointement les éléments $\delta$ et $\varepsilon$.

Le principe général de l'invention consiste donc à effectuer des calculs communs pour déterminer les éléments $\delta$ et $\varepsilon$.

Ainsi, ce mode de réalisation particulier de l'invention permet de réduire le nombre d'opérations à réaliser pour déterminer les éléments $\delta$ et $\varepsilon$, grâce à l'utili-

**EP 2 544 398 B1**

sation de calculs enchevêtrés permettant de relier $\delta$ et $\varepsilon$.

Selon un aspect particulier de l'invention, un tel composant électronique est remarquable en ce que lesdits moyens de calcul des éléments $\delta$ et $\varepsilon$ permettent de réaliser les opérations suivantes :

- déterminer un élément $T = (E^{db}D)^{-e} \bmod N$;
- déterminer l'élément $\delta$ via le calcul suivant : $\delta = D(E^bT)^{(d-1)} \bmod N$;
- déterminer l'élément $\varepsilon$ via le calcul suivant : $\varepsilon = \delta\ T \bmod N$.

Selon un aspect particulier de l'invention, un tel composant électronique est remarquable en ce que ledit nombre entier $N$ est un nombre premier $p$, et en ce que le couple de nombres entiers $(d,e)$ vérifie la propriété suivante $d = a$ et $e = 1/a \bmod (p-1)$ pour un nombre entier positif $a$.

Selon un aspect particulier de l'invention, un tel composant électronique est un coprocesseur cryptographique ou un processeur principal.

Dans un mode de réalisation particulier de l'invention, il est proposé un procédé de calculs cryptographiques, mis en oeuvre dans un composant électronique, lesdits calculs cryptographiques comprenant une étape d'obtention d'un couple de nombres entiers $(d,e)$ pour lequel l'équation suivante est vérifiée $(x^e)^d = x \bmod N$, quelque soit l'élément $x$ appartenant au groupe $Z/NZ$, $N$ étant un nombre entier strictement supérieur à 0, et une étape de détermination d'un élément $\delta = D^e \bmod N$, qui correspond au calcul d'une exponentiation avec un exposant $e$, qui est un entier positif, et d'un élément $\varepsilon = (E)^{\wedge}(-b) \bmod N$ qui correspond à un calcul combinant une inversion modulaire et une exponentiation avec un exposant $b$, qui est un entier positif, avec D et E étant des éléments appartenant au groupe $Z/NZ$. Ce procédé est remarquable en ce l'étape de détermination comprend des calculs communs permettant de déterminer conjointement les éléments $\delta$ et $\varepsilon$.

Ce procédé est remarquable en ce qu'il permet de déterminer des éléments $\delta$ et $\varepsilon$, d'une manière différente par rapport aux techniques de l'art antérieur.

Selon un aspect particulier de l'invention, un tel procédé de calculs cryptographiques est remarquable en ce que l'étape de détermination des éléments $\delta$ et $\varepsilon$ comprend les étapes consistant à :

- déterminer un élément $T = (E^{bd}D)^{-e} \bmod N$;
- déterminer l'élément $\delta$ via le calcul suivant : $\delta = D(E^bT)^{(d-1)} \bmod N$ ;
- déterminer l'élément $\varepsilon$ via le calcul suivant : $\varepsilon = \delta\ T \bmod N$.

Selon un aspect particulier de l'invention, un tel procédé de calculs cryptographiques est remarquable en ce que ledit nombre entier $N$ est un nombre premier $p$, et en ce que le couple de nombres entiers $(d,e)$ vérifie la propriété suivante $d = a$ et $e = 1/a \bmod (p-1)$ pour un nombre entier positif $a$.

Selon un aspect particulier de l'invention, l'entier positif $a$, utilisé dans un tel procédé, possède une taille en nombre de bits qui est inférieure à 50 bits.

Ce procédé est remarquable en ce qu'il permet d'accélérer la détermination des éléments $\delta$ et $\varepsilon$, en comparaison avec les techniques de l'art antérieur, lorsque l'élément $a$ est relativement petit (i.e lorsque $a = 2$ ou 3).

Selon un aspect particulier de l'invention, un tel procédé de calculs cryptographiques est mis en oeuvre lors d'une exécution de la fonction d'encodage d'Icart, par ledit composant électronique, avec $a = 3$ et $b = 1$

Selon un aspect particulier de l'invention, un tel procédé de calculs cryptographiques est mis en oeuvre lors d'une exécution de la fonction d'encodage simplifiée SWU, par ledit composant électronique, avec $a = 2$ et $b = 1$.

Selon un aspect particulier de l'invention, un tel procédé de calculs cryptographiques est un coprocesseur cryptographique ou un processeur principal.

Selon un aspect particulier de l'invention, un des deux éléments $D$ et $E$ utilisé dans un tel procédé de calculs cryptographiques est un nombre aléatoire.

Ainsi, lorsque l'élément $D$ est un nombre aléatoire, il permet de protéger le calcul de l'élément $\varepsilon$, pour un $E$ donné, contre des attaques par canaux cachés (de type DPA (acronyme anglais de « *Differential Power Analysis* ») ou SPA (acronyme anglais de « *Simple Power Analysis* »). De même, lorsque l'élément $E$ est un nombre aléatoire, il permet protéger le calcul de l'élément $\delta$, pour un $D$ donné, contre des attaques par canaux cachés.

Dans un autre mode de réalisation de l'invention, il est proposé un produit programme d'ordinateur qui comprend des instructions de code de programme pour la mise en oeuvre du procédé précité (dans l'un quelconque de ses différents modes de réalisation), lorsque ledit programme est exécuté sur un ordinateur.

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en oeuvre le procédé précité (dans l'un quelconque de ses différents modes de réalisation).

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :

- la figure 1 présente l'architecture simplifiée d'un microcontrôleur selon l'état de la technique tel qu'utilisé dans une carte à puce possédant une interface de communication duale (ou « *dual interface* » en anglais);

- la figure 2 présente un organigramme décrivant les étapes du procédé de calculs cryptographiques selon un mode de réalisation de l'invention ;

## 6. DESCRIPTION DÉTAILLÉE

Sur toutes les figures du présent document, les éléments et étapes identiques sont désignés par une même référence numérique.

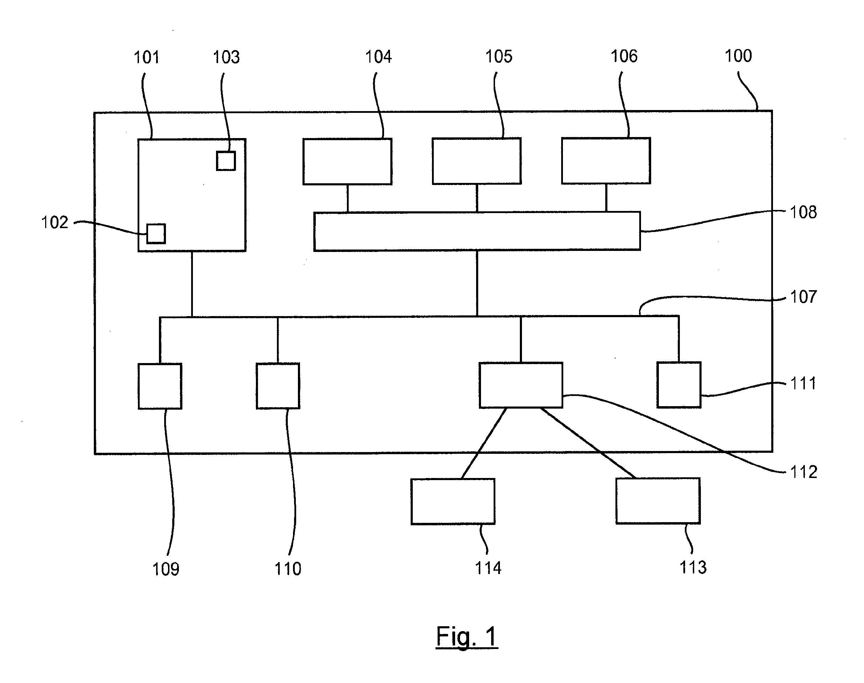

La figure 1 l'architecture simplifiée d'un microcontrôleur selon l'état de la technique tel qu'utilisé dans une carte à puce possédant une interface de communication duale (ou « *dual interface* » en anglais).

Le microcontrôleur 100 comprend :

- une unité de calcul 101 (ou CPU, pour « *Central Processing Unit* » en anglais) dans laquelle se trouve une unité arithmétique et logique 102 (ou ALU, pour « *Arithmetic Logic Unit* » en anglais) abrégée par l'acronyme UAL, ainsi qu'un ou plusieurs registres de travail 103;
- une mémoire vive 104 (ou RAM, pour « *Random Access Memory* » en anglais), dans laquelle des résultats intermédiaires peuvent être stockés temporairement lors de l'exécution des instructions d'un programme d'ordinateur ;
- une mémoire morte 105 (ou ROM, pour « *Read Only Memory* » en anglais) dans laquelle, entre autres, des programmes d'ordinateur sont stockés. Ces programmes sont exécutés par l'unité de calcul 101;
- une mémoire particulière 106 qui correspond soit à une mémoire morte effaçable électriquement et programmable (appelée une mémoire EEPROM, pour « *Electrically-Erasable Programmable Read-Only Memory* ») ou soit à une mémoire flash ;
- des bus de transfert 107 de données utilisés pour permettre le transfert de données entre les différents éléments matériels compris dans le microcontrôleur ;
- une unité de contrôle sécuritaire 108 qui effectue des contrôles sur les données transférées ;
- des coprocesseurs cryptographiques 109 (par exemple un coprocesseur DES, AES, et un coprocesseur cryptographique dédié à la réalisation d'opérations arithmétiques modulaire) ;
- une unité 110 de génération de nombres aléatoires ;
- une unité 111 d'alimentation, de réinitialisation, et de contrôle de l'horloge ;
- une unité 112 constituant une interface d'entrées-sorties pour permettre au microcontrôleur de communiquer avec d'autres dispositifs. Notamment, cette unité est mise en relation avec une antenne 113 (afin de réaliser des communications en mode sans-contacts, selon la norme ISO/IEC 14443 type A ou B) et un port série 114 (afin de réaliser des communications en mode « contact » selon la norme ISO 7816).

Dans l'état de la technique, afin de réaliser les opérations suivantes $\delta = D^{\wedge}(1/a) \bmod p,$ qui correspond au calcul d'une racine *a* ième modulo un nombre premier *p>3,* et $\varepsilon = (E)^{\wedge}(-1) \bmod p$ qui correspond à un calcul d'inversion modulaire, où *D* et *E* sont des éléments du corps fini à *p* éléments, et *a* un nombre petit (par exemple *a* = 2 ou 3), qui sont nécessaires pour mettre en oeuvre certains cryptosystèmes, il est nécessaire de réaliser deux calculs cryptographiques (dont la complexité est équivalente à deux exponentiations) qui sont des opérations coûteuses. Les éléments $\delta$ et $\varepsilon$ peuvent être obtenus, par exemple, en utilisant un produit programme d'ordinateur stocké dans une mémoire morte 105 qui est ensuite exécuté par l'unité de calcul 101 (avec ou non l'utilisation conjointe d'un coprocesseur cryptographique 109).

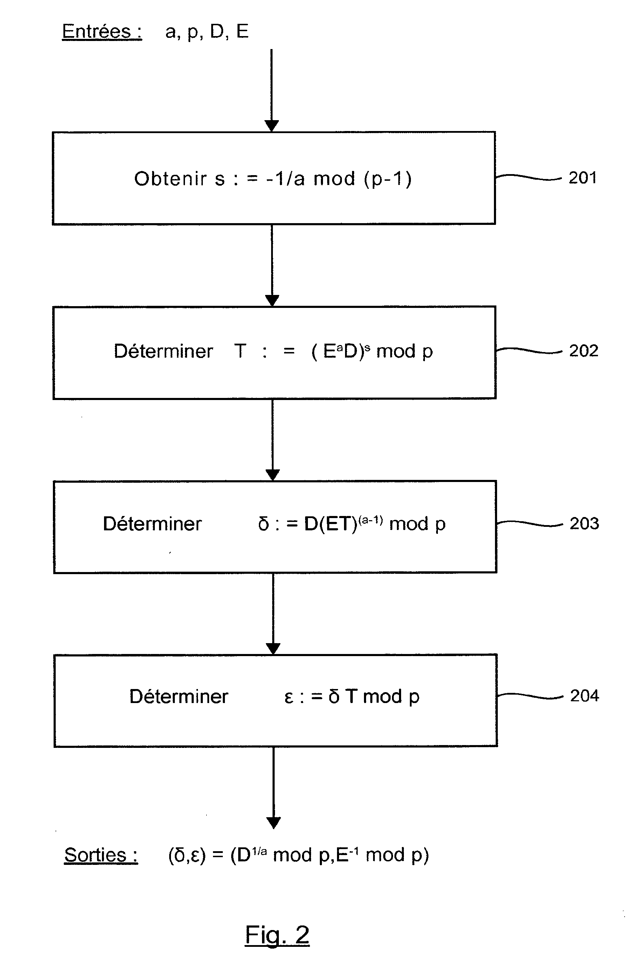

La figure 2 présente un organigramme décrivant les étapes du procédé de calculs cryptographiques selon un mode de réalisation de l'invention.

Ainsi, dans un premier mode de réalisation préférentiel, il est proposé d'utiliser les fonctionnalités d'un coprocesseur cryptographique classique 109, pour déterminer les éléments $\delta= D^{1/a} \bmod p$ et $\varepsilon= (E)^{\wedge}(-1),$ avec *p* un nombre premier, *a* un entier petit et *les éléments D et E des entiers de Z/pZ,* de la manière suivante en réalisant :

a) une étape 201 consistant à obtenir l'élément *s = -1/a mod (p-1)*; la détermination de *s,* pour une valeur de *a* petite, ne nécessite pas de calculer une inversion modulaire de manière coûteuse (par exemple, pour un élément *a = 3,* l'obtention de l'élément *s = (p-2)/3* ne nécessite qu'une division);

b) une étape 202 consistant à déterminer l'élément $T = (E^a D)^s \bmod p$;

c) une étape 203 consistant à déterminer l'élément $D(ET)^{(a-1)} \bmod p$ qui correspond à l'élément $\delta$ attendu;

d) une étape 204 consistant à déterminer l'élément $\delta\,T \bmod p$ qui correspond à l'élément $\varepsilon$ attendu.

Ainsi, la complexité du calcul des éléments $\delta$ et $\varepsilon$ utilisés dans certaines fonctions cryptographiques est réduite. En effet, l'obtention des éléments $\delta$ et $\varepsilon$ ne nécessite désormais qu'une seule opération d'exponentiation. Dès lors, l'obtention des éléments $\delta$ et $\varepsilon$ s'effectue de manière plus rapide qu'avec les techniques de l'art antérieur. Rien n'incitait l'Homme du Métier à déterminer, via ce procédé, les éléments $\delta$ et $\varepsilon$ via des calculs conjoints.

Remarquons que, dans un deuxième mode de réalisation, si les opérations arithmétiques cryptographiques sont uniquement réalisées par une unité de calcul 101, il est bien évidemment possible d'adapter la présente technique à ce cas de figure (i.e en proposant une opération de réduction modulaire qui utilise uniquement l'unité de calcul 101).

La technique d'accélération selon la présente invention peut être utilisée pour accélérer de nombreux cryptosystèmes tels ceux utiliser dans les spécifications des passeports électroniques de troisième génération.

En effet, les passeports électroniques de troisième génération utilisent désormais une fonction d'encodage particulière permettant de faire correspondre à une suite binaire donnée (i.e une succession de bits 0 et 1), un point sur une courbe elliptique. Cette fonction d'encodage peut notamment constituer une brique de base permettant de construire une fonction de hachage en temps déterministe qui peut ensuite être utilisée dans un système de signature/vérification numérique. Il s'avère que la technique divulguée dans le présent document peut être utilisée pour mettre en oeuvre de telles fonctions d'encodage de manière efficace.

Une première fonction d'encodage, appelée la fonction d'encodage d'Icart a été proposée dans le document **D1** correspondant à l'article « *How to Hash into Elliptic Curves* » de T. Icart, publié dans les annales de la conférence CRYPTO 09. Remarquons que cette fonction d'encodage nécessite que la relation suivante soit vérifiée : *p = 2 mod 3.* où p est un nombre premier strictement supérieur à 3.

Pour rappel, la fonction d'encodage d'Icart permet à partir d'un élément *u* quelconque appartenant au corps fini à *p* éléments d'obtenir un point $P = (x,y)$ appartenant à la courbe elliptique définie par l'équation suivante : $y^2 = x^3 + ax + b \bmod p$, où a et b sont des éléments appartenant au corps fini à *p* éléments.

La fonction d'encodage d'Icart est composée de la succession des étapes suivantes consistant à :

a) déterminer $v = (3a-u^4)/(6u) \bmod p$;
b) déterminer $x = (v^2 -b - u^6/27)^{(1/3)} + u^2/3 \bmod p$;
c) déterminer $y = ux +v \bmod p.$

Ainsi, la fonction d'encodage d'Icart nécessite deux exponentiations qui sont des opérations coûteuses d'un point de vue algorithmique (induisant un temps d'exécution relativement long si le composant électronique réalisant ces opérations n'est pas performant).

En effet, en réécrivant les étapes précédentes, on obtient la succession d'étapes suivantes :

a) déterminer $k = (6u)^{(-1)} \bmod p$ ; cette étape nécessite une première opération coûteuse (soit en calculant une inversion modulaire, soit en réalisant le calcul de $(6u)^{(p-2)}$) ;
b) déterminer $d = (p+1)/3$ ;
c) déterminer $v = (3a -u^4).k \bmod p$;
d) déterminer $h = (v^2 - b -(u^2d)^3)^{\,p-d}$. Cette étape nécessite une deuxième opération coûteuse ;
e) *déterminer $x = h + u^2d \bmod p$*;
f) déterminer $y = ux + v \bmod p.$

Un autre mode de réalisation de l'invention consiste à définir une version modifiée de la fonction d'encodage d'Icart qui ne nécessite qu'une seule exponentiation.

Ainsi, la fonction d'Icart selon un mode de réalisation de l'invention comprend la succession des étapes suivantes consistant à :

a) déterminer $v' = (3a-u^4) \bmod p$ ;
b) déterminer $d = (p+1)/3$;
c) déterminer $t' = (v'^2 -(6u)^2b - d(2u^4)^2) \bmod p$ ;
d) déterminer $t = (6u.t')^{d-1}$. Cette étape constitue la seule exponentiation réalisée au cours de l'exécution de la fonction d'encodage ;
e) déterminer $h = t'.t2 \bmod p$;
f) déterminer $k = h .t \bmod p$;
g) déterminer $v = v'. k \bmod p$;
h) déterminer $x = h + u^2d \bmod p$;
i) déterminer $y = ux + v \bmod p$;

Ce mode de réalisation est obtenu en posant $a= 3$, $D = ((3a-u^4)/(6u))^2 - b - u^6/27$ et $E = 6u$ (et donc $s = (p-2)/3)$), en reprenant les notations utilisées en relation avec la figure 2.

Ainsi, on constate que les étapes décrites en relation avec la figure 2 sont bien exécutées.

En effet, le calcul de $T = (E^3D)^s$ consiste à déterminer $((3a-u^4) - b (6u)^2-(6u)^2u^6/27)^s$. Ce calcul correspond à l'étape d) décrite ci-dessus.

La technique divulgué en relation avec la figure 2 permet aussi d'obtenir, dans un autre mode de réalisation, une implémentation de la fonction d'encodage simplifiée SWU (acronyme anglais des noms des auteurs des concepteurs de cette fonction « *Shallue-Woestijne-Ulas* »), utilisant des coordonnées affines, qui est plus rapide que celle proposée dans le document **D2,** correspondant à la note technique « *Supplemental Access control for Machine Readable Travel Documents v.1.01* » publié par l'organisme ICAO (acronyme anglais de « *International Civil Aviation Organisation* »).

Pour rappel, l'implémentation de la fonction d'encodage simplifiée SWU permettant d'obtenir un point en coordonnées affines à partir d'un élément *u* comprend la succession des étapes suivantes :

a) $\alpha = -u^2 \bmod p$
b) $X_2 = -b((1+ \alpha + \alpha^2) / (a(\alpha+ \alpha^2))) \bmod p$
c) $X_3 = \alpha\, X_2 \bmod p$
d) $h_2 = (X_2)^3 + a\, X_2 + b \bmod p$
e) $U = u^3h_2 \bmod p$
f) $A = (h_2)^{p-1-(p+1)/4} \bmod p$
g) si $A^2h_2 = 1 \bmod p$ alors $(x, y) = (X_2, Ah_2 \bmod p)$
h) sinon $(x, y) = (X_3, AU \bmod p)$

Ainsi, il est possible de modifier cette fonction, en utilisant la technique divulguée en relation avec la figure 2, qui conduit à la succession des étapes suivantes :

a) $\alpha = -u^2 \bmod p$
b) $Z = a(\alpha+ \alpha^2) \bmod p$

c) $X_2 = -b(1 + \alpha + \alpha^2) \bmod p$

d) $X_3 = \alpha X_2 \bmod p$

e) $h_2 = (x_2)^3 + a X_2 Z^2 + b Z^3 \bmod p$

f) $U = u^3 h_2 \bmod p$

g) $A = (h_2 Z^3)^{p-1-(p+1)/4} \bmod p$

h) si $A^2 h_2 Z^3 = 1 \bmod p$ alors $(x, y) = (X_2 .(A^2 h_2 Z^2), A h_2 \bmod p)$

i) sinon $(x, y) = (X_3 . (-A^2 h_2 Z^2), AU \bmod p)$

Cependant, cette modification implique que la fonction obtenue n'est pas strictement égale la version affine de la fonction d'encodage simplifiée SWU telle que décrite dans le document **D2**.

En effet, en reprenant les notations utilisées en relation avec la figure 2, et en posant $a = 2$, $D = g(X_i)$ (la fonction $g$ étant définie par l'équation suivante : $g(x) = x^3 + ax + b$ et on cherche à obtenir la racine carré de $D$), $E = Z^3$ (remarquons que, dans cette construction, l'élément $g(X_i)$ n'est pas connu, en revanche on connaît l'élément $g(X_2)Z^3$, par construction dans l'étape e), dès lors pour l'obtenir, il est nécessaire de calculer $Z^{-3}$), et $s = \ll -1/a \gg = (p-1-(p+1)/4)$ (en effet, la valeur de $s$ est choisie de la sorte car pour un élément $u$ du corps fini $F_p$, on a $u^{(p-1-(1/2))} = u^{(p-1-(p+1/4)} \bmod p$, avec $p = 3 \bmod 4$), le calcul de $T$ correspond au calcul de

$$(D.E^2)^s = ((\frac{D}{p})/D)^{\wedge}(1/a) . (\frac{E}{p}).E^{-1}.$$ Ainsi, la valeur de $T$ dépend du symbole de Legendre $(\frac{E}{p})$.

Ainsi, l'influence du symbole de Legendre (qui ne rend pas compatible cette version avec la version affine de la fonction d'encodage simplifiée SWU telle que décrite dans le document D2) doit être corrigée.

Ainsi, il est possible d'obtenir deux versions modifiées dans lesquelles l'influence du symbole de Legendre est corrigée.

La première version consiste à réaliser les étapes suivantes :

a) $\alpha = -u^2 \bmod p$

b) $Z = a(\alpha + \alpha^2) \bmod p$

c) $X_2 = -bZ(1 + \alpha + \alpha^2) \bmod p$

d) $Z = Z^2 \bmod p$

e) $X_3 = \alpha X_2 \bmod p$

f) $h_2 = (X_2)^3 + a X_2 Z^2 + b Z^3 \bmod p$

g) $U = u^3 h_2 \bmod p$

h) $A = (h_2 Z^3)^{p-1(p+1)/4} \bmod p$

i) si $A^2 h_2 Z^3 = 1 \bmod p$ alors $(x, y) = (X_2 .(A^2 h_2 Z^2), A h_2 \bmod p)$

j) sinon $(x, y) = (X_3 . (-A^2 h_2 Z^2), AU \bmod p)$

Ainsi, en reprenant les notations utilisées en relation avec la figure 2, et en posant $a = 2$, $D = g(X_i)$ et $E = Z^6$, on obtient une version compatible avec la version divulguée version affine de la fonction d'encodage simplifiée SWU telle que décrite dans le document D2.

Remarquons que, l'étape h) consiste à calculer

$$(D.E^2)^{\wedge}(\ll -1/a \gg) = $$

$$((\frac{D}{p})/D)^{\wedge}(1/a).E^{-1} \text{ où } (\frac{D}{p})$$ correspond au symbole de Legendre.

Enfin, la deuxième version consiste à réaliser les étapes suivantes :

a) $\alpha = -u^2 \bmod p$

b) $Z = a(\alpha + \alpha^2) \bmod p$

c) $X_2 = -b(1 + \alpha + \alpha^2) \bmod p$

d) $X_3 = \alpha X_2 \bmod p$

e) $h_2 = (X_2)^3 + a X_2 Z^2 + b Z^3 \bmod p$

f) $U = u^3 h_2 \bmod p$

g) $A = Z(h_2 Z^5)^{p-1(p+1)/4} \bmod p$

h) si $A^2 h_2 Z^3 = 1 \bmod p$ alors $(x, y) = (X_2 .(A^2 h_2 Z^2), A h_2 \bmod p )$

i) sinon $(x, y) = (X_3 . (-A^2 h_2 Z^2), AU \bmod p)$

Ainsi, en reprenant les notations utilisées en relation avec la figure 2, et en posant $a = 2$, $D = g(X_i)$ et $E = Z^4$, on obtient une version compatible avec la version divulguée version affine de la fonction d'encodage simplifiée SWU telle que décrite dans le document **D2**.

En effet, cette version consiste à calculer

$$T = (D.E^a)^{\wedge}(\ll -1/a \gg) = ((\frac{D}{p})/D)^{\wedge}(1/a).$$

$$(\frac{E}{p}).E^{-1} \text{ où } (\frac{D}{p})$$ correspond au symbole de Legendre. Cependant, en ayant choisi $E = Z^4$ la relation

suivante est toujours vérifiée: $(\frac{E}{p}) = 1$, et ce, quelle que soit la valeur de Z. Ensuite, on calcule Z.T afin d'obtenir l'élément A, pour obtenir une fonction d'encodage ayant les mêmes propriétés que la fonction d'encodage simplifiée SWU, en coordonnées affines.

Les opérations arithmétiques et les étapes de la figure 2 peuvent être directement intégrées dans un coprocesseur cryptographique, selon un mode de réalisation particulier de l'invention. Ainsi, ce mode de réalisation consiste à réaliser les étapes de la figure 2 sur une machine de calcul dédiée (par exemple un ensemble de portes logiques comme un FPGA ou un ASIC, ou tout autre module matériel).

De manière générale, lorsqu'on souhaite utiliser un coprocesseur arithmétique afin de réaliser des opérations cryptographiques, il est nécessaire de paramétrer le coprocesseur en lui fournissant le type d'opération qu'il doit réaliser (via l'initialisation d'une variable de contrôle), ainsi que les zones mémoires à utiliser (via des pointeurs par exemples) vers les variables d'entrées et la ou les variables de sortie dans laquelle le résultat sera retourné. Ainsi, dans ce mode de réalisation particulier, il est proposé de rajouter un type d'opération particulière pour réaliser automatiquement les étapes divulguées en figure 2.

Remarquons que la technique de l'invention peut aussi être réalisée par une machine de calcul reprogrammable (un ordinateur PC, un processeur DSP) exécutant un programme comprenant une séquence d'instructions.

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Composant électronique permettant de réaliser des calculs cryptographiques, comprenant des moyens permettant de réaliser des opérations d'arithmétique modulaire de base, avec pour modulus un nombre entier $N>0$, et des moyens d'obtention d'un couple de nombres entiers $(d,e)$ pour lequel l'équation suivante est vérifiée $(x^e)^d = x \bmod N$, quel que soit l'élément x appartenant au groupe $Z/NZ$, et comprenant en outre des moyens de calcul d'un élément $\delta = D^e \bmod N$, correspondant au calcul d'une exponentiation avec, pour exposant, l'élément $e$, et d'un élément $\varepsilon = (E)^{\wedge}(-b) \bmod N$, correspondant à un calcul combinant une inversion modulaire et une exponentiation avec un exposant $b$, un entier positif, pour des éléments D et E qui appartiennent au groupe $Z/NZ$, ledit composant électronique étant **caractérisé en ce que** lesdits moyens de calcul sont conçus pour réaliser des calculs communs qui sont fonction à la fois de D et de E, et permettant de déterminer conjointement les éléments $\delta$ *et* $\varepsilon$, **en ce que** lesdits moyens de calcul des éléments $\delta$ *et* $\varepsilon$ sont conçus pour réaliser les opérations suivantes :

   - déterminer un élément $T = (E^{db}D)^{-e} \bmod N$;
   - déterminer l'élément $\delta$ via le calcul suivant : $\delta = D(E^b T)^{(d-1)} \bmod N$;
   - déterminer l'élément $\varepsilon$ via le calcul suivant: $\varepsilon = \delta\, T \bmod N$,

   **en ce que** ledit nombre entier $N$ est un nombre premier p, **en ce que** le couple de nombres entiers $(d, e)$ vérifie la propriété suivante $d = a$ et $e = 1/a \bmod (p-1)$ pour un nombre entier positif $a$ et **en ce que** l'entier positif $a$ possède une taille en nombre de bits qui est inférieure à 50 bits.

2. Composant électronique selon la revendication 1 **caractérisé en ce que** ledit composant électronique est un coprocesseur cryptographique ou un processeur principal.

3. Procédé de calculs cryptographiques, mis en oeuvre dans un composant électronique, lesdits calculs cryptographiques comprenant une étape d'obtention d'un couple de nombres entiers $(d,e)$ pour lequel l'équation suivante est vérifiée $(x^e)^d = x \bmod N$, que lque soit l'élément x appartenant au groupe $Z/NZ$, N étant un nombre entier strictement supérieur à 0, et une étape de détermination d'un élément $\delta = D^e \bmod N$, qui correspond au calcul d'une exponentiation avec un exposant $e$, qui est un entier positif, et d'un élément $\varepsilon = (E)^{\wedge}(-b) \bmod N$ qui correspond à un calcul combinant une inversion modulaire et une exponentiation avec un exposant $b$, qui est un entier positif, avec $D$ et $E$ étant des éléments appartenant au groupe $Z/NZ$, caractérisé en ce l'étape de détermination comprend des calculs communs qui sont fonction à la fois de $D$ et de $E$, et permettant de déterminer conjointement les éléments $\delta$ *et* $\varepsilon$, en ce que l'étape de détermination des éléments $\delta$ et $\varepsilon$ comprend les étapes consistant à :

   - déterminer un élément $T = (E^{bd}D)^{-e} \bmod N$;
   - déterminer l'élément $\delta$ via le calcul suivant: $\delta = D(E^b T)^{(d-1)} \bmod N$;
   - déterminer l'élément $\varepsilon$ via le calcul suivant: $\varepsilon = \delta\, T \bmod N$,

   **en ce que** ledit nombre entier $N$ est un nombre premier p, **en ce que** le couple de nombres entiers $(d, e)$ vérifie la propriété suivante $d = a$ et $e = 1/a \bmod (p-1)$ pour un nombre entier positif $a$ et en ce que l'entier positif $a$ possède une taille en nombre de bits qui est inférieure à 50 bits.

4. Procédé de calculs cryptographiques selon la revendication 3 **caractérisé en ce qu'**il est mis en oeuvre lors d'une exécution de la fonction d'encodage d'Icart par ledit composant électronique, et **en ce que** $a = 3$ et $b = 1$.

5. Procédé de calculs cryptographiques selon la revendication 3 **caractérisé en ce qu'**il est mis en oeuvre lors d'une exécution de la fonction d'encodage simplifiée SWU par ledit composant électronique, et **en ce que** $a = 2$ et $b = 1$.

6. Procédé de calculs cryptographiques selon l'une quelconque des revendications 3 à 5, **caractérisé en ce que** le composant électronique est un coprocesseur cryptographique ou un processeur principal.

7. Procédé de calculs cryptographiques selon la revendication 3 **caractérisé en ce qu'**un des deux éléments *D et E* est un nombre aléatoire.

8. Produit programme d'ordinateur, comprenant des instructions de code de programme pour la mise en oeuvre du procédé selon au moins une des revendications 3 à 7, lorsque ledit programme est exécuté sur un ordinateur.

9. Médium de stockage lisible par ordinateur et non transitoire, stockant un programme d'ordinateur comprenant un jeu d'instructions exécutables par un ordinateur ou un processeur pour mettre en oeuvre le procédé selon au moins une des revendications 3 à 7.

**Patentansprüche**

1. Elektronische Komponente für die Durchführung kryptographischer Berechnungen, die Mittel zur Durchführung von Standardoperationen modularer Arithmetik umfasst, mit einer Ganzzahl $N > 0$ als Modulus, sowie Mittel zum Erzielen eines Ganzzahlenpaars $(d, e)$, für das die Gleichung $(x^e)^d = x \bmod N$ geprüft wird, unabhängig vom zur Gruppe Z/NZ gehörenden Element x, die zudem Mittel zum Berechnen eines Elements $\delta = D^e \bmod N$ umfasst, was der Berechnung einer Potenzierung mit dem Element e als Exponenten entspricht, sowie eines *Elements $\varepsilon = (E)^\wedge(-b) \bmod N$*, was einer Berechnung entspricht, die eine modulare Inversion und eine Potenzierung mit einem Exponenten *b*, einer positiven Ganzzahl, kombiniert, für zur Gruppe *Z/NZ* gehörende Elemente *D* und *E*, wobei die elektronische Komponente **dadurch gekennzeichnet ist, dass** die Mittel zur Berechnung so gestaltet sind, dass sie gemeinsame Berechnungen, die sowohl von *D* als auch von *E* abhängen, durchführen, und ermöglichen, die Elemente $\varepsilon$ und $\delta$ gemeinsam zu bestimmen, und dadurch, dass die Mittel zum Berechnen der Elemente $\varepsilon$ und $\delta$ gestaltet sind, um folgende Rechnenoperationen durchzuführen:

- ein Element $T = (E^{db}D)^{-e} \bmod N$ bestimmen
- das Element $\delta$ durch folgende Berechnung bestimmen: $\delta = D(E^bT)^{(d-1)} \bmod N$
- das Element $\varepsilon$ durch folgende Berechnung bestimmen: $\varepsilon = \delta\, T \bmod N,$

dadurch, dass die Ganzzahl *N* eine Primzahl *p* ist, und dadurch, dass das Ganzzahlpaar *(d,e)* die Eigenschaft $d = a$ und $e = 1/a \bmod (p-1)$ für eine positive Ganzzahl *a* überprüft und dadurch, dass die positive Ganzzahl a eine Bitzahlgröße unter 50 Bit aufweist.

2. Elektronische Komponente nach Anspruch 1, **dadurch gekennzeichnet, dass** die elektronische Komponente ein kryptographischer Koprozessor oder ein Hauptprozessor ist.

3. Verfahren für kryptographische Berechnungen, das in einer elektronischen Komponente angewendet wird, wobei die kryptographischen Berechnungen einen Schritt zum Erzielen eines Ganzzahlenpaares *(d, e)* umfassen, für das die Gleichung $(x^e)^d = x \bmod N$ geprüft wird, unabhängig vom zur Gruppe Z/NZ gehörenden Element x, wobei N unbedingt eine Ganzzahl größer als 0 ist, sowie einen Schritt zum Ermitteln eines Elements $\delta = D^e \bmod N,$ was der Berechnung einer Potenzierung mit einem Exponenten e, der eine positive Ganzzahl ist, entspricht, und eines Elements $\varepsilon = (E)^\wedge(-b) \bmod N$, was einer Berechnung, welche eine modulare Inversion und eine Potenzierung mit einem Exponenten b kombiniert, der eine positive Ganzzahl ist, entspricht, mit *D* und *E*, welche Elemente sind, die zur Gruppe *Z/NZ* gehören, **dadurch gekennzeichnet, dass** der Schritt zum Ermitteln gemeinsame Berechnungen umfasst, die sowohl von *D* als auch von *E* abhängen, und ermöglicht, die Elemente $\varepsilon$ und $\delta$ gemeinsam zu bestimmen, und dadurch, dass der Schritt zum Ermitteln der Elemente $\varepsilon$ und $\delta$ folgende Schritte umfasst, die bestehen in:

- Bestimmen eines Elements $T = (E^{db}D)^{-e} \bmod N$
- Bestimmen des Elements $\delta$ durch folgende Berechnung: $\delta = D(E^bT)^{(d-1)} \bmod N$
- Bestimmen des Elements $\varepsilon$ durch folgende *Berechnung: $\varepsilon = \delta\, T \bmod N,$*

dadurch, dass die Ganzzahl *N* eine Primzahl *p* ist, und dadurch, dass das Ganzzahlpaar (*d,e*) die Eigenschaft $d = a$ und $e = 1/a \bmod (p-1)$ für eine positive Ganzzahl *a* überprüft und dadurch, dass die positive Ganzzahl *a* eine Bitzahlgröße unter 50 Bit aufweist.

4. Verfahren für kryptographische Berechnungen nach Anspruch 3, **dadurch gekennzeichnet, dass** es bei einer Ausführung der ICART-Verschlüsselungsfunktion durch die elektronische Komponente angewendet wird, und dadurch, dass $a = 3$ und $b = 1$.

5. Verfahren für kryptographische Berechnungen nach Anspruch 3, **dadurch gekennzeichnet, dass** es bei einer Ausführung der vereinfachten SWU-Verschlüsselungsfunktion durch die elektronische Komponente angewendet wird, und dadurch, dass $a = 2$ und $b = 1$.

6. Verfahren für kryptographische Berechnungen nach einem der Ansprüche 3 bis 5, **dadurch gekennzeichnet, dass** die elektronische Komponente ein kryptographischer Koprozessor oder ein Hauptprozessor ist.

7. Verfahren für kryptographische Berechnungen nach Anspruch 3, **dadurch gekennzeichnet, dass** eins der zwei Elemente D und U eine Zufallszahl ist.

8. Computerprogrammprodukt mit Anweisungen für den Programmcode für die Anwendung des Verfahrens nach mindestens einem der Ansprüche 3 bis 7, wenn das Programm in einem Computer ausgeführt wird.

9. Nicht vorübergehendes und von einem Computer lesbares Speichermedium, das ein Computerprogramm mit einem von einem Computer oder einem Prozessor ausführbaren Satz von Anweisungen speichert, um das Verfahren nach mindestens einem der Ansprüche 3 bis 7 anzuwenden.

**Claims**

1. An electronic component for performing cryptographic calculations, the component including means for performing basic modulo arithmetic operations with an integer N>0 as the modulus and means for obtaining a pair of integers (d, e) for which the following equation is satisfied $(x^e)^d = x \bmod N$, whatever the element $\underline{x}$ belonging to the group Z/NZ, and further including means for calculating an element $\delta = D^e \bmod N$, corresponding to calculating an exponentiation, with the element $\underline{e}$ as the exponent, and an element $\varepsilon = (E)\text{^}(-b) \bmod N$ corresponding to a calculation combining modular inversion and with exponentiation using a positive integer exponent $\underline{b}$, for elements D and E belonging to the group Z/NZ, said electronic component being **characterised in that** said calculation means are designed to perform common calculations that are a function both of D and of E, and enabling the elements $\delta$ and $\varepsilon$ to be determined jointly, **in that** said means for calculating the elements $\delta$ and $\varepsilon$ are designed to perform the following operations:

   - determining an element $T = (E^{db}D)^{-e} \bmod N$;
   - determining the element $\delta$ via the following calculation: $8 = D(E^bT)^{(d-1)} \bmod N$; and
   - determining the element $\varepsilon$ via the following calculation: $\varepsilon = \delta T \bmod N$;

   **in that** said integer number N is a prime number $\underline{p}$, **in that** the pair of integers (d, e) satisfies the following property d = a and e = 1/a mod (p-1) for a positive integer a, and **in that** the positive integer $\underline{a}$ possesses a size in number of bits that is less than 50 bits.

2. An electronic component according to claim 1, **characterised in that** the electronic component is a cryptographic coprocessor or a main processor.

3. A method of performing cryptographic calculations in an electronic component, said cryptographic calculations comprising a step of obtaining a pair of integers (d, e) for which the following equation is satisfied $(x^e)^d = x \bmod N$, whatever the element $\underline{x}$ belonging to the group Z/NZ, N being an integer strictly greater than zero, and a step of determining an element $\delta = D^e \bmod N$, which corresponds to calculating an exponentiation with an exponent $\underline{e}$ that is a positive integer, and an element $\varepsilon = (E)\text{^}(-b) \bmod N$, which corresponds to a calculation combining modular inversion with exponentiation using a positive integer exponent $\underline{b}$, for elements D and E belonging to the group Z/NZ, **characterised in that** the determination step comprises common calculations that are a function both of D and of E, and enabling the elements $\delta$ and $\varepsilon$ to be determined jointly, **in that** the step of determining the elements $\delta$ and $\varepsilon$ comprises the steps of:

   - determining an element $T = (E^{bd}D)^{-e} \bmod N$;
   - determining the element $\delta$ via the following calculation: $\delta = D(E^bT)^{(d-1)} \bmod N$; and
   - determining the element $\varepsilon$ via the following calculation: $\varepsilon = \delta T \bmod N$;

   **in that** said integer number N is a prime number $\underline{p}$, **in that** the pair of integers (d, e) satisfies the following property d = a and e = 1/a mod (p-1) for a positive integer $\underline{a}$, and **in that** the positive integer $\underline{a}$ possesses a size in number of bits that is less than 50 bits.

4. A method of cryptographic calculation according to claim 3, **characterised in that** it is performed while said electronic component is executing the Icart encoding function, and **in that** a = 3 and b = 1.

5. A method of cryptographic calculation according to claim 3, **characterised in that** it is performed while the electronic component is executing the simplified SWU encoding function, and **in that** a = 2 and b = 1.

6. A cryptographic calculation method according to any one of claims 3 to 5, **characterised in that** the electronic component is a cryptographic coprocessor or a main processor.

7. A cryptographic calculation method according to claim 3, **characterised in that** one of the two elements D and E is a random number.

8. A computer program product comprising program code instructions for performing the method according to any one of claims 3 to 7 when said program is executed on a computer.

9. A non-transient computer-readable data medium storing a computer program comprising a set of instructions executable by a computer or a processor for performing the method according to any one of claims 3 to 7.

Fig. 1

Entrées : a, p, D, E

Obtenir s : = -1/a mod (p-1) — 201

Déterminer T : = $(E^a D)^s$ mod p — 202

Déterminer δ : = $D(ET)^{(a-1)}$ mod p — 203

Déterminer ε : = δ T mod p — 204

Sorties : (δ,ε) = ($D^{1/a}$ mod p,$E^{-1}$ mod p)

Fig. 2